# EUROPÄISCHE PATENTANMELDUNG

(11) **EP 4 506 230 A1**
(43) Veröffentlichungstag der Anmeldung: **12.02.2025**
(21) Anmeldenummer: 23191093.6
(22) Anmeldetag: 11.08.2023
(51) Int. Cl.: B61L 23/04, B61L 27/60, G06N 20/00

(54) **COMPUTER-IMPLEMENTIERTES VERFAHREN ZUM TRAINIEREN EINES MACHINE-LEARNING-MODELLS**

(71) Anmelder: Siemens Aktiengesellschaft, 80333 München (DE)
(72) Erfinder: Höfig, Kai, 83101 Rohrdorf (DE); Stal, Michael, 80469 München (DE)
(74) Vertreter: Siemens Patent Attorneys

(57) **Zusammenfassung**

Die Erfindung betrifft ein computer-implementiertes Verfahren zum Trainieren eines Machine-Learning-Modells, umfassend die Schritte: a. Bereitstellen eines Trainingsdatensatzes mit einer Mehrzahl von gelabelten Datentupel (S1); wobei jedes Datentupel der Mehrzahl der gelabelten Datentupel Trainingsdaten in Bezug auf mindestens eine Fahrstrecke eines Transportmittels umfasst; wobei jedes Datentupel der Mehrzahl der gelabelten Datentupel mindestes eine Gefahrensituation und mindestens ein der mindestens einen Gefahrensituation zugeordnetes Zeitfenster als Label umfasst; wobei das Label kennzeichnet, dass
die mindestens eine Gefahrensituation in dem mindestens einen zugeordneten Zeitfenster vorliegt; b. Trainieren des Machine-Learning-Modells auf Basis des Trainingsdatensatzes (S2); und c. Bereitstellen des trainierten Machine-Learning-Modells (S3) .

## Beschreibung

### 1. Technisches Gebiet

Die Erfindung betrifft ein computer-implementiertes Verfahren zum Trainieren eines Machine-Learning-Modells. Ferner ist die Erfindung auf ein entsprechendes computer-implementiertes Verfahren zum Klassifizieren eines Eingabedatensatzes gerichtet sowie entsprechende technische Systeme.

### 2. Stand der Technik

Das autonome Fahren gewinnt zunehmend an Bedeutung. Diverse autonome Fahrzeuge, wie Autos und Züge, sind in diesem Zusammenhang aus dem Stand der Technik bekannt. Der Automatisierungsgrad nimmt ebenfalls erheblich zu.

Die autonomen Fahrzeuge sind dazu eingerichtet fahrerlos betrieben zu werden. Sie sind folglich selbst-fahrend.

Im Zuge der Weiterentwicklung der autonomen Züge und deren Steuerungssysteme wird die Steuerung des Zuges Schritt für Schritt vom Triebfahrzeugführer (auch Zugführer genannt) auf ein technisches System mit automatisierter Steuerung (auch Zugsteuerung genannt) übertragen.

Hindernisse im Gleisbett von Zügen stellen bis heute schwerwiegende Risiken im Zugverkehr dar. Die Triebfahrzeugführer müssen mitunter sehr schnell reagieren, um einen größeren Schaden von Zug und Passagieren abzuwenden. Hindernisse können Teile von durch Unwetter beschädigter Streckeneinrichtung wie Oberleitungen, Masten, aber auch umgefallene Bäume, Personen oder Tiere sein.

Bei autonomen Fahrzeugen ist daher eine zuverlässige und effiziente automatisierte Hinderniserkennung sowie die Einleitung entsprechender Gegenmaßnahmen, wie eine Schnellbremsung oder Notbremsung im Gleisbett, entscheidend. Dies ist erforderlich, um die genannten Gefahren wie einen Zusammenstoß zwischen dem autonomen Zug und den Personen auf dem Gleisbett zu verhindern oder zumindest zu reduzieren.

Die autonomen Züge benötigen daher für die automatisierte Hinderniserkennung herkömmlicherweise sehr viel und sehr teure Sensorik sowie Rechenleistung, um ihre Umgebung ausreichend zu erfassen und die Gefahren zuverlässig zu erkennen. Die Gefahren werden jedoch nur erkannt, wenn sie sich in Reichweite der verbauten Sensorik befinden. Nachteilig an der Sensorik ist auch, dass die Informationen in Bezug auf die Gefahren meist zu spät zur Verfügung gestellt werden. Der Grund hierfür liegt darin, dass üblicherweise gemäß dem Stand der Technik nur die aktuell an einem Wegpunkt des autonomen Zuges vorliegenden Gefahren berücksichtigt werden, nicht aber die weitere Entwicklung bis zum Eintreffen des autonomen Zuges.

Es ist daher wünschenswert zeitnah und rechtzeitig auf die Gefahren zu reagieren unter Berücksichtigung der Gefahrensituationen, die zum Zeitpunkt des Eintreffens des autonomen Zuges auch noch relevant sind.

Die vorliegende Erfindung stellt sich daher die Aufgabe ein computer-implementiertes Verfahren zum Trainieren eines Machine-Learning-Modells bereitzustellen, welches effizienter und zuverlässiger ist.

### 3. Zusammenfassung der Erfindung

Die oben genannte Aufgabe wird erfindungsgemäß durch ein computer-implementiertes Verfahren zum Trainieren eines Machine-Learning-Modells gelöst, umfassend die Schritte:
a. Bereitstellen eines Trainingsdatensatzes mit einer Mehrzahl von gelabelten Datentupel; wobei
   jedes Datentupel der Mehrzahl der Datentupel Trainingsdaten in Bezug auf mindestens eine Fahrstrecke eines Transportmittels umfasst; wobei
   jedes Datentupel der Mehrzahl der Datentupel mindestes eine Gefahrensituation und mindestens ein der mindestens einen Gefahrensituation zugeordnetes Zeitfenster als Label umfasst; wobei das Label kennzeichnet, dass
   die mindestens eine Gefahrensituation in dem mindestens einen zugeordneten Zeitfenster vorliegt;
b. Trainieren des Machine-Learning-Modells auf Basis des Trainingsdatensatzes; und
c. Bereitstellen des trainierten Machine-Learning-Modells als Ausgabe.

Dementsprechend ist die Erfindung auf ein computer-implementiertes Verfahren zum Trainieren eines Machine-Learning-Modells gerichtet. Mit anderen Worten wird ein Machine-Learning-Modell trainiert. Das Machine-Learning-Modell kann auch als Modell zum Maschinellen Lernen ausgelegt werden.

In einem ersten Verfahrensschritt wird der Trainingsdatensatz als Eingabe bereitgestellt. Der Trainingsdatensatz kann dabei über eine oder mehrere Eingabeschnittstellen einer Recheneinheit empfangen werden. Zusätzlich oder alternativ können die Ausgabedaten in Form des trainierten Machine-Learning-Modells auch über eine oder mehrere Ausgabeschnittstellen an eine Recheneinheit gesendet werden. Die Schnittstellen können als serielle oder parallele Schnittstellen ausgebildet sein. Die Schnittstellen stellen vorteilhafterweise eine effiziente und reibungslose Datenübertragung zwischen Recheneinheiten sicher. Die Daten können bidirektional ausgetauscht werden ohne Datenstau.

Der Trainingsdatensatz weist dabei die gelabelten Datentupel auf. Die Datentupel weisen jeweils Trainingsdaten hinsichtlich der Fahrstrecke des Transportmittels auf. Das Transportmittel kann ein Transportmittel des Straßen- oder Schienenverkehrs sein. Bevorzugt ist das Transportmittel als ein autonomer Zug oder ein sonstiges autonomes Fahrzeug ausgebildet.

Weiterhin weist der Trainingsdatensatz auch die Kennzeichen oder Label auf. Die Datentupel weisen jeweils die Gefahrensituation und das zugehörige Zeitfenster als Label auf. Die Gefahrensituation ist in dem bestimmten zugehörigen Zeitfenster gegeben. Folglich kann die Gefahrensituation im dem bestimmten Zeitfenster vorliegen, allerdings in einem anderen Zeitfenster bereits beseitigt sein.

Der Trainingsdatensatz kann in einer flüchten oder nichtflüchtigen Speichereinheit gespeichert werden, bevorzugt Datenbank oder Cloud. Dementsprechend kann die Speichereinheit als eine Datenbank, eine Cloud oder sonstige flüchtige, nicht-flüchtige Speichereinheit ausgebildet sein. Die Speichereinheit ermöglicht eine zuverlässige und schnelle Datensicherung. Die Speichereinheit kann hinsichtlich ihrer Speicherkapazität sowie Skalierbarkeit etc. flexibel ausgewählt werden.

In den weiteren Verfahrensschritten wird das Machine-Learning-Modell trainiert und nach erfolgtem Training als Ausgabe bereitgestellt. Nach dem Training kann das Machine-Learning-Modell auf Eingabedatensätze angewandt werden.

Der Vorteil der vorliegenden Erfindung liegt folglich darin eine Klassifizierung und somit auch Classifier bereitzustellen, mit welchem Gefahrensituationen im Gegensatz zum Stand der Technik zuverlässiger und effizienter erkannt werden.

Die Gefahren werden folglich nicht mehr nur zum aktuellen Zeitpunkt erfasst, sondern es wird auch der zeitliche Verlauf der Gefahren sowie die Handlungsempfehlung für die Gefahren berücksichtigt. Weiterhin werden auch kurzfristige Gefahren durch Fußgänger oder andere Verkehrsteilnehmer zuverlässig erkannt.

In einer Ausgestaltung umfassen die Trainingsdaten Sensordaten, wobei die Sensordaten bevorzugt durch mindestens eine Sensoreinheit erfasst werden.

In einer Ausgestaltung umfassen die Sensordaten Daten in Bezug auf mindestens einen Verkehrsteilnehmer, mindestens eine Infrastrukturkomponente, das Transportmittel, die Fahrstrecke.

In einer Ausgestaltung umfassen die Trainingsdaten weitere Daten, wobei die weiteren Daten bevorzugt in einer Speichereinheit gespeichert werden und von dieser empfangen werden.

Dementsprechend können die Trainingsdaten unterschiedliche Daten und auch Datenquellen umfassen, wie Sensordaten. Die Sensordaten können mit weiteren Daten ergänzt werden. Die Daten können dabei vorteilhafterweise abhängig vom Transportmittel, der Fahrstecke und sonstigen Bedingungen flexibel gewählt werden. Die Datenbasis für das Training wird durch die Ergänzung mit weiteren Eingabedaten verbessert und die Zuverlässigkeit des Verfahrens insgesamt erhöht.

In einer Ausgestaltung ist die mindestens eine Gefahrensituation eine Gefahrensituation ausgewählt aus der Gruppe bestehend aus:
ein Stau und ein Hindernis auf der Fahrstrecke. Dementsprechend können unterschiedliche Gefahren und auch Gefahrensituationen mit dem erfindungsgemäßen Verfahren betrachtet werden. Die Gefahr kann in Bezug auf das Transportmittel oder die Fahrstrecke bestehen, wie Stau auf der Fahrstrecke oder auch Hindernisse auf der Fahrstecke. Beispielhafte Hindernisse sind Personen, aber auch Gegenstände wie Bäume oder heruntergefallene Äste. Alternativ oder zusätzlich stellen auch Wetterbedingungen oder Naturkatastrophen Gefahren für das Transportmittel auf der Fahrstrecke dar. Die Gefahr kann für das Transportmittel relevant sein und/oder aber auch die Passagiere, welche mit dem Transportmittel transportiert werden.

In einer Ausgestaltung ist das Machine-Learning-Modell ein Modell zum überwachten Maschinellen Lernen, supervised Machine Learning.

Ferner betrifft die Erfindung ein technisches System zum Durchführen des obigen Verfahrens.

Ferner betrifft die Erfindung ein computer-implementiertes Verfahren zum Klassifizieren eines Eingabedatensatzes, umfassend die Schritte:
a. Bereitstellen des Eingabedatensatzes mit Eingabedaten in Bezug auf mindestens eine Fahrstrecke eines Transportmittels;
b. Klassifizieren des Eingabedatensatzes mittels des trainierten Machine-Learning-Modells nach einem der vorhergehenden Ansprüche; und
c. Bereitstellen des klassifizierten Eingabedatensatzes; wobei

der klassifizierte Eingabedatensatz mindestens eine Gefahrensituation und mindestens ein der mindestens einen Gefahrensituation zugeordnetes Zeitfenster umfasst; wobei
die mindestens eine Gefahrensituation in dem mindestens einen zugeordneten Zeitfenster vorliegt.

In einer Ausgestaltung weist das computer-implementierte Verfahren weiterhin auf
- Ausgeben des trainierten Machine-Learning-Modells und/oder des klassifizierten Eingabedatensatzes auf einer Anzeigeeinheit,
- Speichern des trainierten Machine-Learning-Modells und/oder des klassifizierten Eingabedatensatzes in einer Speichereinheit,
- Übermitteln des trainierten Machine-Learning-Modells und/oder des klassifizierten Eingabedatensatzes an eine Recheneinheit,
- Steuern des Transportmittels in Abhängigkeit von dem klassifizierten Eingabedatensatz durch eine Steuereinheit des Transportmittels,
- Anpassen eines Fahrplans, der Fahrstrecke des Transportmittels und/oder einer Routenplanung in Abhängigkeit von dem klassifizierten Eingabedatensatz, und/oder
- Einleiten mindestens einer Maßnahme unter Berücksichtigung des klassifizierten Eingabedatensatzes, wobei die mindestens eine Maßnahme bevorzugt eingeleitet wird, um die mindestens eine Gefahrensituation zu verhindern oder zu beseitigen.

Dementsprechend können eine oder mehrere Maßnahmen nach der Bereitstellung des trainierten Machine-Learning-Modells als Ausgabe des erfindungsgemäßen Verfahrens eingeleitet werden. Die Maßnahmen können gleichzeitig, nacheinander oder auch stufenweise durchgeführt werden. Zunächst wird das Machine-Learning-Modell auf die Eingabedaten angewandt.

Dementsprechend können dem Nutzer oder Anwender, wie Triebfahrzeugführer, der klassifizierte Eingabedatensatz auf einer Anzeigeeinheit einer Recheneinheit angezeigt werden. Der klassifizierte Eingabedatensatz kann um weitere Ausgabedaten ergänzt werden, wie Informationen hinsichtlich der betroffenen Transportmittel sowie Fahrstrecken etc. Weiterhin kann die Ausgabe auch gespeichert werden, die Ausgabe selbst oder in Form einer entsprechenden Nachricht oder Mitteilung an eine andere Einheit, wie ein Endgerät oder sonstige Recheneinheit übertragen werden. Die Steuereinheit (bzw. Zugsteuerung) des autonomen Zuges kann zusätzlich oder alternativ entsprechende Maßnahmen einleiten, wie Änderung des Fahrplans oder Anpassung der Geschwindigkeit des autonomen Zuges. Die Anpassung der Geschwindigkeit kann auch eine Änderung des Fahrplans bewirken.

Weiterhin kann folglich auch eine Wegstreckenplanung derart gestaltet werden, dass die vorhergesagten Verweildauern der Gefahren mit einbezogen werden.

Ferner betrifft die Erfindung ein technisches System zum Durchführen des obigen Verfahrens. Bevorzugt ist das technische System ein autonomer Zug oder eine technische Einheit des autonomen Zuges, wie Steuereinheit oder Zugsteuerung.

Die Erfindung kann ferner ein oder mehrere Computerprogrammprodukte mit einem Computerprogramm, das Mittel zur Durchführung der oben beschriebenen Verfahren betreffen, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.

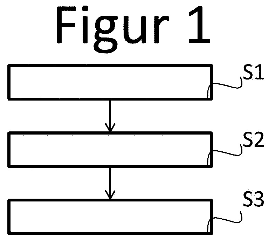

- FIG 1: zeigt eine schematisches Ablaufdiagramm des erfindungsgemäßen Verfahrens.

### 5. Beschreibung der bevorzugten Ausführungsformen

Im Folgenden werden bevorzugte Ausführungsformen der vorliegenden Erfindung in Bezug auf die Figuren beschrieben.

Figur 1 stellt ein Ablaufdiagramm des erfindungsgemäßen Verfahrens mit den Verfahrensschritten S1 bis S3 schematisch dar.

Zunächst können alle Daten der verfügbaren Sensoren des Transportmittels zusammengetragen werden S1. Diese Sensordaten können Daten in Bezug auf die Verkehrsteilnehmer, aber auch die Daten spezieller anderer Infrastrukturkomponenten umfassen. Dadurch wird der aktuelle Ist-Zustand erfasst.

Auf Grundlage dieser Sensordaten können die Gefahren erkannt werden. Dabei wird erkannt, ob eine Gefahrensituation in einem bestimmten oder relevanten Zeitfenster vorliegt. Mit anderen Worten wird jeder Gefahr ein Zeitfenster mit übergeben, in der die Gefahr auch relevant ist S1.

Beispielsweise hat ein autonomes Fahrzeug eine bestimmte Fahrstrecke von seinem aktuellen Standort zu seinem Zielort geplant. Beispielhafte Gefahren sind nicht nur Staus auf der Fahrstrecke, sondern auch allgemeine Gefahren für das autonome Fahrzeug, wie etwa Hindernisse auf der Fahrstrecke, Personen auf der Fahrstrecke, Baustellen auf der Fahrstrecke usw.

Ist zum Beispiel geplant, dass ein Hindernis auf der Fahrstrecke des autonomen Fahrzeugs zu einem gewissen Zeitpunkt entfernt sein wird und nach Routenplanung kommt das autonome Fahrzeug erst nach diesem Zeitpunkt an der Gefahrenstelle an, ist das Hindernis weniger relevant. In diesem Fall wird gemäß einer Ausführungsform an dieser Stelle keine Gefahr mehr angezeigt und an dieser Stelle ist kein Gefahrenhinweis für das autonome Fahrzeug aktiv.

Weiterhin können die Gefahren im laufenden Betrieb ständig überwacht werden, gemäß einer Ausführungsform in Form einer Liste der relevanten Gefahren. Bei Wegfall einer Gefahr kann diese aus der Liste entfernt werden. Alternativ oder zusätzlich können neue Gefahren hinzugefügt werden.

Durch die ständige Überwachung aller Gefahrensituationen und des zeitlichen Verlaufs einer Gefahrensituation ist das Machine-Learning-Modell in der Lage mit Hilfe von maschinellem Lernen ein eigenes Vorhersagemodell für Gefahren zu entwickeln. Das Vorhersagemodell lernt aus den Sensordaten Gefahrensituationen zu ermitteln und diese in den Ist-Zustand zu übernehmen. Da auch die Daten vorhanden sind, die vor Eintritt einer Gefahr angefallen sind, wird es dem Machine-Learning-Modell ermöglicht Gefahrensituationen vorherzusagen. Beispielsweise können Wahrscheinlichkeitsmodelle für herabgefallene Äste auf Basis von Wetterdaten in Kombination mit Bäumen in der Nähe der Fahrstrecke erstellt werden. Mithilfe dieser Wahrscheinlichkeitsmodelle kann vorhergesagt werden, dass in zwei Stunden an der Stelle an der sich das autonome Fahrzeug befindet, Sturm ist und die Wahrscheinlichkeit für herabfallende Äste sehr hoch ist. Das autonome Fahrzeug kann diese Gefahr antizipieren und beispielsweise die Gefahrenstelle umfahren, vorher eine Pause einlegen oder die Fahrt verlangsamen, um Unfälle zu vermeiden.

Weiterhin kann auch die Dauer der Gefahren ermittelt werden. Das können Stauverläufe sein, aber auch sehr kurze zeitliche Verläufe, wie z.B. Personen die einen Fahrweg überqueren.

Weiterhin ist es möglich Verhaltensmodelle zur optimalen Bewältigung der Gefahrensituationen zu erstellen. Da Gefahrensituationen auch spontan auftreten können, also ohne dass es eine Vorhersage gibt, kann das Machine-Learning-Modell auf Grundlage der gesammelten Daten erlernen, was gutes Verhalten und was schlechtes Verhalten in der jeweiligen Gefahrensituation ist. Ein Indikator dafür kann die Zeit sein, die in der gleichen Gefahrensituation durch unterschiedliche Reaktionen verbraucht wurde, aber auch das Schadensausmaß.

## Patentansprüche

1. Computer-implementiertes Verfahren zum Trainieren eines Machine-Learning-Modells, umfassend die Schritte:
a. Bereitstellen eines Trainingsdatensatzes mit einer Mehrzahl von gelabelten Datentupel (S1); wobei
jedes Datentupel der Mehrzahl der gelabelten Datentupel Trainingsdaten in Bezug auf mindestens eine Fahrstrecke eines Transportmittels umfasst; wobei
jedes Datentupel der Mehrzahl der gelabelten Datentupel mindestes eine Gefahrensituation und mindestens ein der mindestens einen Gefahrensituation zugeordnetes Zeitfenster als Label umfasst; wobei
das Label kennzeichnet, dass
die mindestens eine Gefahrensituation in dem mindestens einen zugeordneten Zeitfenster vorliegt;
b. Trainieren des Machine-Learning-Modells auf Basis des Trainingsdatensatzes (S2); und
c. Bereitstellen des trainierten Machine-Learning-Modells (S3) .

2. Computer-implementiertes Verfahren nach Anspruch 1, wobei die Trainingsdaten Sensordaten umfassen, wobei die Sensordaten bevorzugt durch mindestens eine Sensoreinheit erfasst werden.

3. Computer-implementiertes Verfahren nach Anspruch 1 oder Anspruch 2, wobei die Sensordaten Daten in Bezug auf mindestens einen Verkehrsteilnehmer, mindestens eine Infrastrukturkomponente, das Transportmittel, die Fahrstrecke umfassen.

4. Computer-implementiertes Verfahren nach einem der vorhergehenden Ansprüche, wobei die Trainingsdaten weitere Daten umfassen, wobei die weiteren Daten bevorzugt in einer Speichereinheit gespeichert werden und von dieser empfangen werden.

5. Computer-implementiertes Verfahren nach einem der vorhergehenden Ansprüche, wobei die mindestens eine Gefahrensituation eine Gefahrensituation ist, ausgewählt aus der Gruppe bestehend aus:
ein Stau und ein Hindernis auf der Fahrstrecke.

6. Computer-implementiertes Verfahren nach einem der vorhergehenden Ansprüche, wobei das Machine-Learning-Modell ein Modell zum überwachten Maschinellen Lernen, supervised Machine Learning, ist.

7. Computer-implementiertes Verfahren zum Klassifizieren eines Eingabedatensatzes, umfassend die Schritte:
a. Bereitstellen des Eingabedatensatzes mit Eingabedaten in Bezug auf mindestens eine Fahrstrecke eines Transportmittels;
b. Klassifizieren des Eingabedatensatzes mittels des trainierten Machine-Learning-Modells nach einem der vorhergehenden Ansprüche; und
c. Bereitstellen des klassifizierten Eingabedatensatzes; wobei
der klassifizierte Eingabedatensatz mindestens eine Gefahrensituation und mindestens ein der mindestens einen Gefahrensituation zugeordnetes Zeitfenster umfasst; wobei
die mindestens eine Gefahrensituation in dem mindestens einen zugeordneten Zeitfenster vorliegt.

8. Computer-implementiertes Verfahren nach Anspruch 7, weiterhin aufweisend
- Ausgeben des trainierten Machine-Learning-Modells und/oder des klassifizierten Eingabedatensatzes auf einer Anzeigeeinheit,
- Speichern des trainierten Machine-Learning-Modells und/oder des klassifizierten Eingabedatensatzes in einer Speichereinheit,
- Übermitteln des trainierten Machine-Learning-Modells und/oder des klassifizierten Eingabedatensatzes an eine Recheneinheit,
- Steuern des Transportmittels in Abhängigkeit von dem klassifizierten Eingabedatensatz durch eine Steuereinheit des Transportmittels,
- Anpassen eines Fahrplans, der Fahrstrecke des Transportmittels und/oder einer Routenplanung in Abhängigkeit von dem klassifizierten Eingabedatensatz, und/oder
- Einleiten mindestens einer Maßnahme unter Berücksichtigung des klassifizierten Eingabedatensatzes, wobei die mindestens eine Maßnahme bevorzugt eingeleitet wird, um die mindestens eine Gefahrensituation zu verhindern oder zu beseitigen.
